# FASCICULE DE BREVET EUROPEEN

(11) **EP 3 918 510 B1**
(45) Date de publication et mention de la délivrance du brevet: **07.05.2025**
(21) Numéro de dépôt: 20701807.8
(22) Date de dépôt: 31.01.2020
(51) Int. Cl.: G06K 7/10

(54) **PROCEDE DE LECTURE MANUELLE D'UN CODE, ET DISPOSITIF ASSOCIÉ**
VERFAHREN ZUM MANUELLEN LESEN EINES CODES UND ZUGEHÖRIGE VORRICHTUNG
METHOD FOR MANUAL READING OF A CODE, AND ASSOCIATED DEVICE

(30) Priorité: 31.01.2019 FR 1900892
(43) Date de publication de la demande: 08.12.2021
(73) Titulaire: Saint-Gobain Glass France, 92400 Courbevoie (FR)
(72) Inventeur: COSTANTINI, Daniele, 75005 PARIS (FR); LAUDEREAU, Jean-Baptiste, 75015 PARIS (FR)
(74) Mandataire: Saint-Gobain Recherche
(86) Numéro de dépôt international: PCT/EP2020/052396
(87) Numéro de publication internationale: WO 2020/157260

(56) Documents cités:
- EP-A1- 3 017 398
- EP-B1- 3 017 398
- WO-A1-2015/121550
- US-A1- 2002 030 817
- US-B1- 6 354 504

## Description

La présente invention concerne la lecture manuelle d'un code sur un article verrier sous forme de feuille de verre.

Le verre est généralement fabriqué sous la forme d'un ruban continu, par exemple un ruban continu de verre flotté.

Ce ruban est ensuite découpé en feuilles de verre dits « motherglass » (littéralement « verre mère » en français même si ce terme n'est pas utilisé) ; lesquelles feuilles sont par exemple des « PLF » (Plateaux de verre Large Format), typiquement de dimensions 3,21m par environ 6m ou des « DLF » (Dimensions Largeur de Fabrication) de dimensions environ 2,55m par 3,21m.

Ces feuilles de verre de grandes dimensions peuvent ensuite être découpées en feuilles de verre de dimensions plus petites, formant par exemple des primitifs pour la découpe de morceaux de verre de formes plus ou moins complexes.

Pour assurer leur traçabilité, ces feuilles de verre peuvent être marquées à l'aide d'un identifiant ou code, notamment en une dimension (i.e. de type « code-barre » ou analogue), ou en deux dimensions (i.e. de type « Datamatrix » ou analogue).

Ces codes sont par exemple marqués au moyen d'un rayonnement électromagnétique de tout type adapté, orienté de préférence perpendiculairement à la feuille de verre, i.e. au plan général de la feuille de verre.

Ils peuvent contenir tout type d'information tel que par exemple un numéro servant d'identifiant de la feuille de verre, le lieu, l'heure ou la date de fabrication, etc.

Les codes ainsi marqués sont relus en ligne par des dispositifs de détection automatiques de type scanner. tels que mentionnés par exemple dans la demande de brevet WO 2014/128424 qui décrit un dispositif de détection pour lire un identifiant unique sur des plateaux de verre.

US 2002/030817 décrit un système de lecture de code lecture de code, une méthode dans laquelle la lumière passe deux fois à travers le code et une méthode de fabrication d'un dispositif utilisant la lecture de code sur un substrat en verre.

WO 2015/121550 A1 décrit un dispositif de lecture d'un code d'identification sur une feuille de verre en défilement.

Il existe toutefois des situations dans lesquelles un opérateur souhaiterait lire manuellement le code marqué sur une feuille de verre :
Sur la ligne de fabrication, les feuilles de verre subissent généralement une ou plusieurs étapes de transformation, par exemple le dépôt d'une ou plusieurs couches dans un coater, ou une découpe, etc.

Après chaque étape de transformation, il peut être souhaitable d'isoler et de vérifier visuellement une ou plusieurs feuilles choisies aléatoirement, pour détecter d'éventuels défauts et s'assurer ainsi que la qualité correspond à des spécifications prédéterminées, ou encore pour vérifier la concordance entre les défauts de la feuille et ceux identifiés préalablement par des dispositifs automatiques de détection optique. Lors de cette vérification visuelle, l'opérateur lit le code de la feuille de verre pour l'identifier et/ou connaître ses caractéristiques.

Plus en aval du processus, avant l'envoi au client, on souhaite parfois identifier l'une des feuilles de verre entreposées sur un chevalet (généralement la feuille la plus à l'extérieur de l'empilement), pour s'assurer que les feuilles de verre entreposées sur ledit chevalet correspondent bien à la commande du client. Dans ce cas, le code peut être placé indifféremment sur la face située en regard de l'opérateur souhaitant lire le code, ou du côté opposé.

Il existe donc un besoin de pouvoir lire manuellement un code sur un article, notamment une feuille de verre, de façon simple et fiable, quel que soit l'emplacement du code sur la feuille de verre.

L'invention a pour objectif de répondre à ce besoin.

Cet objectif est atteint avec un procédé de lecture manuelle tel que décrit dans la revendication 1, les revendications dépendantes étant des modes avantageux de réalisation..

Dans la présente description, on entend par article une feuille de verre.

Par lecture manuelle, on entend ici une lecture impliquant l'intervention d'un opérateur et mettant en œuvre un dispositif portatif (i.e. pouvant être porté et déplacé par l'opérateur).

Par ailleurs, on dit qu'un article est fixe lorsqu'il n'est pas déplacé durant la lecture, par opposition notamment aux lectures dites « en défilement », réalisées durant un déplacement de l'article, par exemple sur un convoyeur.

Enfin, la direction d'observation du système d'imagerie optique peut être, par exemple, l'axe optique du système d'imagerie lorsque les éléments du système d'imagerie optique sont à symétrie de révolution.

Il est à noter que le système d'imagerie optique peut (ou non) comprendre une source lumineuse intégrée. Cette source lumineuse est à différencier de la source lumineuse utile (ci-après source lumineuse) située, selon l'invention, du deuxième côté de l'article lors de la lecture.

Le procédé selon l'invention permet, grâce à l'éclairage de la deuxième face principale de l'article, de réduire la visibilité de défauts au niveau du code tels que des fissures ou des bulles, en changeant le contraste de l'image acquise par le système d'imagerie optique.

En effet, lorsque le code présente des défauts comme des fissures ou des bulles, ces derniers diffusent de la lumière, qui peut être captée par le système d'imagerie optique et qui peut masquer une partie du code ou empêcher une bonne résolution des symboles constituant le code par exemple. Ces défauts peuvent souvent conduire à un échec du décodage ou même un échec de détection de la présence du code.

La demanderesse a constaté l'utilité d'associer le dispositif portable de lecture de code à une source lumineuse située du deuxième côté de l'article afin de faire ressortir le code en comparaison des défauts.

Avec ces dispositions, et à titre d'exemple non limitatif, les symboles du code peuvent se comporter comme des petites lentilles dirigeant, focalisant ou défocalisant en direction du système d'imagerie optique la lumière émise par une source lumineuse située du deuxième côté de l'article. Les symboles deviennent alors plus visibles que les fissures qui diffusent simplement la lumière, et un dispositif portatif de lecture de code parvient plus facilement à décoder le code.

A titre d'exemple non limitatif encore, les symboles peuvent se comporter plutôt comme des masques qui empêchent la lumière de la source située du deuxième côté de l'article de parvenir au système d'imagerie optique, contrairement aux défauts qui laissent passer la lumière. Les symboles ont alors un contraste différent de celui des défauts, et un dispositif portatif de lecture de code parvient aussi à décoder le code plus facilement. De façon particulièrement avantageuse, la source lumineuse mise en œuvre dans le procédé de l'invention facilite donc la relecture d'un code de qualité dégradée en faisant ressortir les symboles par rapport aux défauts.

La lecture du code est ainsi améliorée par rapport à une lecture qui s'opérerait sans source lumineuse du deuxième côté, en particulier lorsque la qualité de marquage du code est mauvaise.

Par ailleurs, dans le cas d'un article à basse transmission lumineuse, la source lumineuse située du deuxième côté de l'article permet de visualiser et d'imager un code marqué sur la face opposée à l'opérateur, autrement dit la deuxième face principale, ou marqué dans l'épaisseur de l'article.

Dans la présente description, on entend par article un substrat seul, par exemple un substrat verrier, ou un tel substrat recouvert d'une ou plusieurs couches sur l'une ou chacune de ses faces principales.

Le substrat peut être par exemple une feuille de verre flotté, notamment un PLF ou un DLF tels que définis précédemment.

L'article (c'est-à-dire le substrat et éventuellement la ou les couches qui le revêt(ent), le cas échéant) a une transmission lumineuse d'au moins 1%.

Le substrat et/ou la ou les couches qui éventuellement le revêt(ent) peu(ven)t être absorbant(s) : dans ce cas la transmission lumineuse de l'article est typiquement comprise entre 1 et 70%. Mais la transmission lumineuse peut aussi, comme alternative, être strictement supérieure à 70%.

Le code peut être un code en une dimension, notamment de type code barre, ou en deux dimensions, notamment de type Datamatrix, QR code ou analogue.

Selon un exemple, le code peut être marqué sur la première ou la deuxième face principale de l'article. Selon un autre exemple, le code est marqué dans l'épaisseur de l'article.

Le code peut être marqué par laser. A titre d'exemple non limitatif, un tel laser peut être un laser à CO₂ délivrant des impulsions d'une durée de quelques dizaines de microsecondes à quelques millisecondes à une longueur d'onde comprise entre 9.4 et 10.6 µm. Dans cet exemple, les impulsions laser retirent une partie du substrat pour y dessiner les symboles du code. Lorsque ces symboles sont illuminés par une source lumineuse, par exemple la précédente source lumineuse placée du deuxième côté de l'article, ils peuvent par exemple diffuser, réfléchir, focaliser ou défocaliser la lumière et devenir visibles pour un système de lecture de code. A titre d'exemple non limitatif encore, il est possible de marquer le code par une méthode d'impression de pigments. Ces pigments peuvent être par exemples des pigments colorés, absorbants ou fluorescents. Les pigments peuvent être dispersés dans un solvant organique ou aqueux et la solution est appliquée localement pour imprimer les symboles du code. Le solvant est ensuite évaporé pour créer l'adhésion des pigments sur l'article. Lorsque ces symboles sont illuminés par une source lumineuse, par exemple la précédente source lumineuse placée du deuxième côté de l'article, ils peuvent émettre ou réfléchir de la lumière ou au contraire la masquer ou ne pas la réfléchir et ainsi être visualisés par un dispositif de lecture de code.

A titre non limitatif, la source lumineuse située du deuxième côté de l'article est typiquement une source de lumière blanche. Il peut aussi être bénéfique d'utiliser une source lumineuse émettant préférentiellement aux longueurs d'onde pour lesquels l'article absorbe peu.

Selon un exemple non limitatif, elle comprend au moins un dispositif à diodes électroluminescentes organiques OLED ou, comme alternative, au moins un dispositif LED, associé à un diffuseur.

La source lumineuse comprend au moins une zone d'éclairement, mais peut éventuellement comprendre une pluralité de zones d'éclairement, séparées entre elles par des zones sombres, notamment des zones masquées.

On entend ici par zone d'éclairement de la source lumineuse une zone de ladite source qui éclaire effectivement, et notamment qui n'est pas masquée. Une zone d'éclairement correspond donc typiquement à une surface émettrice de la source lumineuse.

Dans le cas d'un dispositif OLED, la zone d'éclairement est par exemple la couche extérieure du dispositif. Dans le cas d'un dispositif LED associé à un diffuseur, la zone d'éclairement est la surface du diffuseur orientée vers l'observateur.

Selon une disposition de l'invention, la au moins une zone d'éclairement a une étendue plus grande que le code, de préférence 10 fois plus grande. A noter que l'on entend par surface du code la surface délimitée par une courbe ou un ensemble de segments de droite fermé(e) circonscrit(e) au code.

Selon un exemple, la au moins une zone d'éclairement est plane.

Selon un exemple, la source lumineuse a une luminance (ou intensité lumineuse par unité de surface) moyenne sur sa au moins une zone d'éclairement comprise entre 630 et 140000 cd/m², de préférence comprise entre 2800 et 6000 cd/m² (pour un éclairage de type bright field) ou entre 25 000 et 140 000 cd/m² (pour un éclairage de type dark field). On pourra par exemple vérifier une telle valeur avec un luminancemètre du commerce.

Selon un exemple, la luminance est sensiblement homogène à l'œil nu sur toute la au moins une zone d'éclairement, autrement dit, la luminance de la source lumineuse sur ladite zone d'éclairement est telle que son homogénéité calculée comme étant 1-E/Lmoy est supérieure à 0.5, avec E l'écart-type de la luminance sur sa au moins une zone d'éclairement et Lmoy la luminance moyenne sur ladite zone d'éclairement.

Selon un exemple de mise en œuvre, lors de la lecture, la source lumineuse est alignée avec la direction d'observation, laquelle correspond par exemple, dans le cas d'un système d'imagerie optique à symétrie de révolution, à l'axe optique du système d'imagerie optique.

Dans une configuration avantageuse de l'invention, lors de la lecture, le capteur optique observe une zone d'éclairement de la source lumineuse. L'éclairage ainsi obtenu est dit en champ clair (communément connu sous le terme anglais « bright field ») : il s'agit d'un éclairage direct, i.e. orienté directement vers le capteur optique.

Dans ce cas, la distance, mesurée orthogonalement aux faces principales de l'article, entre la source lumineuse et la deuxième face principale de l'article est comprise entre 6 et 16 cm, de préférence entre 10 et 14 cm.

Dans une autre configuration, la source lumineuse est configurée et/ou positionnée de sorte que, lors de la lecture, l'éclairage est dit en champ sombre (communément connu sous le terme anglais « dark field ») : il s'agit alors d'un éclairage indirect, i.e. non orienté directement vers le capteur optique, de sorte que ledit capteur observe une zone sombre et capte seulement la lumière diffusée par le code à lire.

Selon un exemple d'éclairage de type dark field, lors de la lecture, la source lumineuse est alignée avec l'axe optique du système d'imagerie optique mais comprend une zone sombre entourée d'une ou plusieurs zones d'éclairement, le capteur optique observant la zone sombre.

Par exemple, une telle zone sombre peut être obtenue en masquant une zone d'éclairement de la source lumineuse.

Dans ce cas, la distance, mesurée orthogonalement aux faces principales de l'article, entre la source lumineuse et la deuxième face principale de l'article est de préférence comprise entre 1 et 5 cm.

Selon un autre exemple d'éclairage de type dark field, lors de la lecture, la source lumineuse est simplement décalée par rapport à l'axe optique du système d'imagerie. Dans ce cas, plus précisément, la source lumineuse (et en particulier ses zones d'éclairement) n'est pas dans le champ d'observation du capteur optique.

Selon une disposition avantageuse, le capteur optique comprend un capteur matriciel. De façon connue, un capteur matriciel est composé de pixels formant une matrice de taille n x m avec n et m strictement supérieurs à 1.

Selon un exemple, le dispositif portatif comprend en outre une unité de traitement d'image.

Selon un exemple de mise en œuvre, le procédé comprend une étape préliminaire de positionnement de l'article devant la source lumineuse, ladite source lumineuse étant fixe.

Selon un autre exemple de mise en œuvre, le procédé comprend une étape de positionnement de la source lumineuse du deuxième côté de l'article, avant, simultanément ou après positionnement du dispositif portatif, l'article étant fixe.

Selon une disposition particulièrement avantageuse, le dispositif portatif intègre le système d'imagerie optique et la source lumineuse, et ledit dispositif est engagé autour d'un bord de l'article dans une position dans laquelle le capteur optique est situé du premier côté de l'article en regard du code dans une direction de lecture correspondant à la direction d'observation du système d'imagerie optique, et la source lumineuse est disposée du deuxième côté de l'article.

L'invention concerne également un dispositif portatif tel que décrit dans la revendication 13, les revendications dépendantes étant des modes avantageux de réalisation.

Le dispositif portatif comprend par exemple une première branche portant le système d'imagerie optique et une deuxième branche portant la source lumineuse, les première et deuxième branches étant espacées l'une de l'autre de sorte à définir entre elles un espace de réception.

Selon un exemple, le dispositif comprend en outre des moyens de préhension, notamment une poignée.

Les caractéristiques suivantes, définies précédemment, sont également applicables audit dispositif portatif :
- la source lumineuse peut comprendre au moins un dispositif à diodes électroluminescentes organiques OLED. Comme alternative, elle peut comprendre au moins un dispositif LED, associé à un diffuseur.
- la source lumineuse peut avoir au moins une zone d'éclairement et l'étendue de la au moins une zone d'éclairement est comprise entre 5 et 900 cm².
- la au moins une zone d'éclairement peut être plane.
- la source lumineuse peut avoir une luminance (ou intensité lumineuse par unité de surface) moyenne sur sa au moins une zone d'éclairement comprise entre 630 et 140000 cd/m², de préférence comprise entre 2800 et 6000 cd/m² ou entre 25 000 et 140 000 cd/m².
- la luminance peut être sensiblement homogène sur toute la surface émettrice.
- la distance entre la surface émettrice de la source lumineuse et le capteur optique peut être comprise entre 10 et 25 cm.
- la source lumineuse peut être alignée avec l'axe optique du système d'imagerie optique.
- la source lumineuse peut être alignée avec l'axe optique du système d'imagerie optique et le capteur optique observe une zone d'éclairement de la source lumineuse.
- la source lumineuse peut être alignée avec l'axe optique du système d'imagerie optique et la source lumineuse comprend une zone sombre entourée d'une ou plusieurs zones d'éclairement, le capteur optique observant la zone sombre.
- la source lumineuse peut être décalée par rapport à l'axe optique du système d'imagerie.
- le capteur optique peut comprendre un capteur matriciel.
- le dispositif portatif peut comprendre en outre une unité de traitement d'image.

Plusieurs exemples de réalisation sont décrits dans le présent exposé. Toutefois, sauf précision contraire, les caractéristiques décrites en relation avec un exemple de réalisation quelconque peuvent être appliquées à un autre mode ou exemple de réalisation.

L'invention sera bien comprise et ses avantages apparaîtront mieux, à la lecture de la description détaillée qui suit, de plusieurs exemples représentés non limitatifs. La description se réfère aux dessins annexés.
[Fig. 1] illustre un premier mode de mise en œuvre du procédé de l'invention.
[Fig. 2] illustre un deuxième mode de mise en œuvre du procédé de l'invention.
[Fig. 3] illustre un élément de la figure 2.
[Fig. 4] illustre le procédé selon un troisième mode de mise en œuvre de l'invention.
[Fig. 5] illustre un dispositif portatif particulièrement adapté pour la mise en œuvre du procédé selon un quatrième mode.
[Fig. 6] est un tableau comparatif catégorisant les résultats de lecture de codes à l'aide du procédé selon l'invention, avec une source lumineuse de luminance de 2800 cd/m2 et sur des articles verriers de transmission lumineuse différente.
[Fig. 7] est un tableau comparatif catégorisant les résultats de lecture de codes à l'aide du procédé selon l'invention, avec une source lumineuse de luminance de 1300 cd/m2 et sur des articles verriers de transmission lumineuse différente.
[Fig. 8] est un tableau comparatif catégorisant les résultats de lecture de codes à l'aide du procédé selon l'invention, avec une source lumineuse de luminance de 630cd/m2 et sur des articles verriers de transmission lumineuse différente.

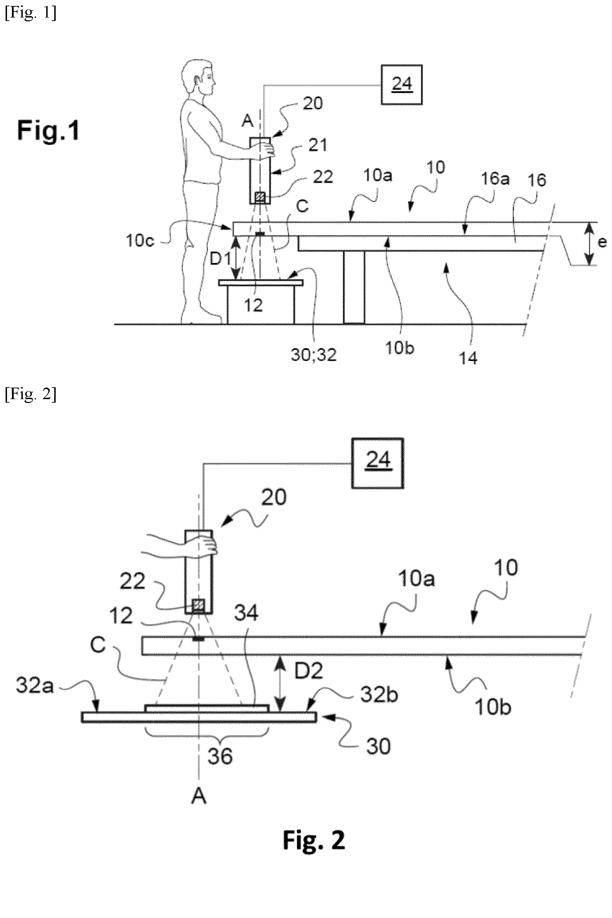

La figure 1 illustre un premier mode de mise en œuvre du procédé de lecture manuelle selon l'invention.

L'opérateur souhaite lire un code 12 marqué à proximité de la périphérie d'un article 10, ici une feuille formée d'un substrat verrier, par exemple un PLF teinté, ci-après appelée « feuille de verre » par souci de simplification.

La transmission lumineuse de la feuille de verre, mesurée selon la norme NF EN 410, est par exemple d'environ 10%.

Une telle feuille de verre 10 présente typiquement une première face principale 10a et une deuxième face principale 10b parallèles et opposées, reliées par une tranche 10c. L'épaisseur e de la feuille de verre, mesurée orthogonalement aux faces principales, entre lesdites faces, est typiquement comprise entre 1,7 et 5 mm.

A noter que la feuille de verre 10 pourrait, comme variante, être constituée du substrat verrier revêtu d'une ou plusieurs couches sur une de ses faces, ou pourrait au contraire comprendre un nombre différent de couches sur chacune de ses faces.

Dans l'exemple, la feuille de verre 10 est préalablement disposée sur un support fixe de lecture, prenant ici la forme d'une table 14, la partie de ladite feuille portant le code 12 se trouvant en porte-à-faux par rapport au plateau 16 de la table 14.

Bien évidemment, le support d'article pourra prendre toute autre forme adaptée, notamment celle d'un chevalet, d'une ventouse, etc.

La deuxième face 10b de la feuille de verre 10, dite ici face arrière, est en contact avec la surface supérieure 16a du plateau 16.

Dans l'exemple illustré, le code 12 est un code marqué par laser sur la deuxième face 10b de la feuille de verre 10, à une distance comprise entre 2 et 5 mm de la tranche 10c. Il s'agit par exemple d'un code en deux dimensions de tout type adapté, notamment choisi parmi la liste suivante: 3-DI code, Aztex Code, Codablock, Code 1, Code 16K, Dot Code, QR Code, ezCode, BeeTagg Big, BeeTagg Landscape, Data Matrix, Maxicode, Snpwflake, Verocode, BeeTagg Hexagon, BeeTagg None, ShotCode, MiniCode, Code 49, Datastrip Code, CP Code, ISS SuperCode.

Comme alternative, le code 12 pourrait aussi être marqué dans l'épaisseur de la feuille de verre 10 ou sur la première face 10a de la feuille 10.

Conformément à l'invention, la deuxième face 10b de la feuille de verre 10 est éclairée, dans sa zone située au droit du code 12, par une source lumineuse utile 30 (appelée ci-après et dans tout le texte source lumineuse).

Selon ce premier mode de mise en œuvre, la source lumineuse 30 est fixe par rapport au support d'article 14. Comme illustrée sur la figure 1, elle est ici alignée avec le code 12 dans une direction orthogonale aux faces principales 10a, 10b de la feuille de verre.

Il s'agit typiquement d'une source de lumière blanche, par exemple un dispositif à diodes électroluminescentes organiques OLED ou un dispositif à LED associé à un diffuseur, formant une zone unique d'éclairement, plane, sensiblement parallèle aux faces principales 10a, 10b de la feuille de verre 10.

Avantageusement, la distance D1, mesurée orthogonalement aux faces principales de la feuille 10a, 10b -, entre la deuxième face principale 10b de la feuille de verre 10 et la source lumineuse 30 (sa zone d'éclairement 32, autrement dit sa surface émettrice) est comprise entre 6 et 16 cm, de préférence entre 10 et 14 cm.

La luminance de la source lumineuse 30 est, de préférence, sensiblement homogène sur toute la zone d'éclairement 32 afin de s'assurer que le code est illuminé de manière homogène sur toute sa surface.

La luminance moyenne est typiquement comprise entre 630 et 140000 cd/m².

L'opérateur souhaitant lire le code 12 est situé d'un premier côté de la feuille de verre 10 où il fait face à la première face 10a de la feuille de verre 10, dite ici face avant.

Pour lire le code depuis le premier côté de la feuille de verre 10, il utilise, selon l'invention, un dispositif portatif 20 muni d'un système d'imagerie optique 21 comprenant au moins un capteur optique 22, par exemple un capteur matriciel, ainsi généralement qu'un système de lentilles et une source lumineuse intégrée située autour du système de lentilles (non illustrées ici).

Comme illustré sur la figure 1, le capteur optique 22 peut être défini par sa direction générale d'observation correspondant ici à son axe optique A, et par son champ d'observation C qui dépend de la taille du capteur et du système de lentilles.

Le dispositif portatif 20 est configuré pour être pris en main et déplacé dans l'espace par l'opérateur.

Comme illustré sur la figure 1, le dispositif portatif 20 est positionné du premier côté de la feuille de verre 10 avec le capteur optique 22 en regard du code 12 dans une direction de lecture correspondant à l'axe optique A.

Dans cette position et conformément à l'agencement décrit précédemment, le capteur optique 22 observe la zone d'éclairement 32 de la source lumineuse 30. L'éclairage ainsi obtenu est dit en champ clair (brightfield) : il s'agit d'un éclairage direct, i.e. orienté directement vers le capteur optique 22.

Pour assurer un tel éclairage en tenant compte des imprécisions de position du dispositif portatif 20, il est avantageux que la surface de la zone d'éclairement 32 de la source lumineuse 30 soit conséquente, avantageusement au moins 10 fois supérieure à la surface du code 12 lui-même, et typiquement comprise entre 5 et 900 cm².

Dans cette position, l'opérateur actionne un interrupteur ou une gâchette afin de déclencher la capture d'images par le capteur 22. Le capteur optique 22 capture ensuite une image du code.

L'image est ensuite transmise à une unité de traitement d'image 24 adaptée permettant par exemple de détecter la présence du code, de le localiser, de corriger la forme et le contraste afin de pouvoir ensuite décoder le code, et pouvant faire partie soit du dispositif portatif 20 soit d'une structure externe telle qu'un ordinateur ou une tablette, par exemple en liaison sans fil avec le dispositif portatif 20.

Dans le cas d'un éclairage de type bright field tel que défini précédemment, il a été constaté que la combinaison d'une luminance moyenne de la source lumineuse 30 comprise entre 2800 et 6000 cd/m² associée à une distance entre la deuxième face principale 10b de la feuille de verre 10 et la source lumineuse comprise entre 6 et 16 cm, de préférence entre 10 et 14 cm, permet de lire le code quelle que soit la transmission lumineuse de l'article.

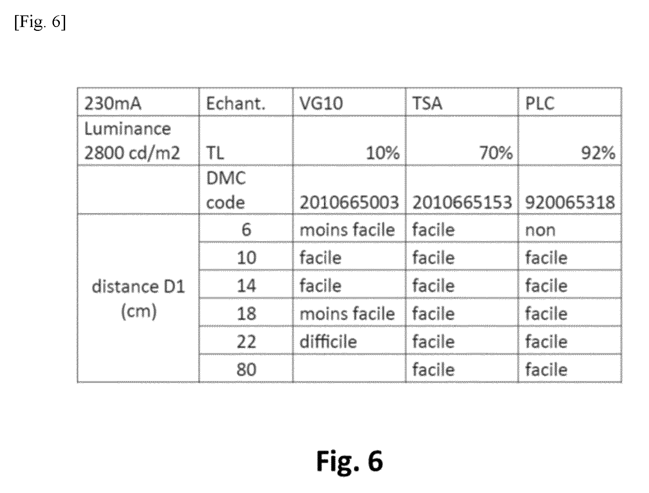

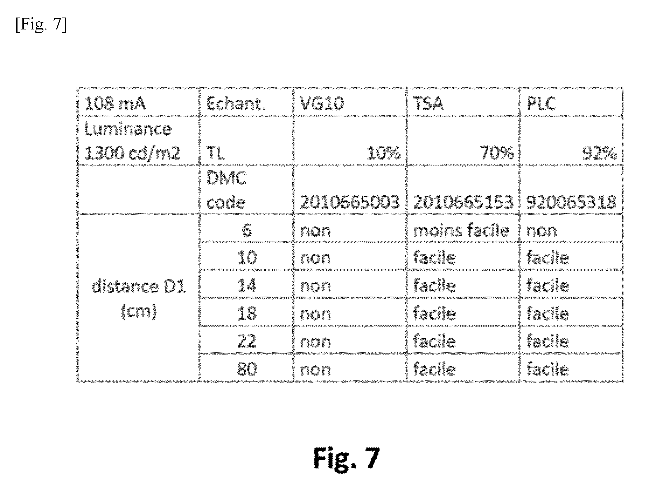

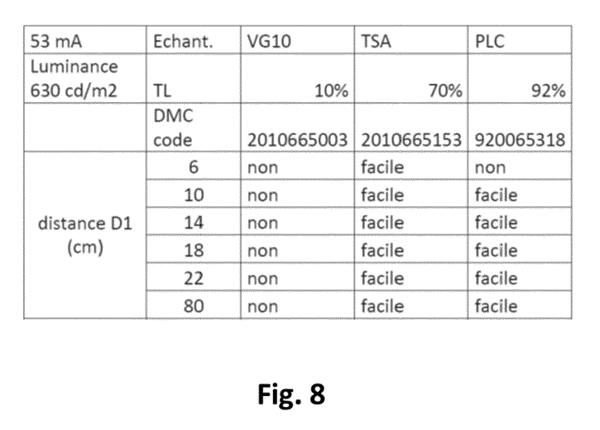

A titre illustratif, les figures 6 à 8 fournissent des résultats d'essais pour trois luminances moyennes différentes : 2800 cd/m² pour les essais du tableau de la figure 6, 1300 cd/m² pour la figure 7, 630 cd/m² pour la figure 8.

Pour chaque niveau de luminance, des lectures ont été réalisées sur trois types de verres présentant des transmissions lumineuses (TL) différentes, respectivement de 10, 70 et 92%. Pour chaque verre, la distance D1 a été modifiée successivement pour prendre des valeurs comprises entre 6 et 80 cm.

On observe que la lecture d'un code marqué sur le verre est aisé, pour n'importe quel verre, quelle que soit sa transmission lumineuse, lorsque la luminance moyenne est égale à 2800 cd/m² et la distance D1 comprise de 10 ou 14 cm.

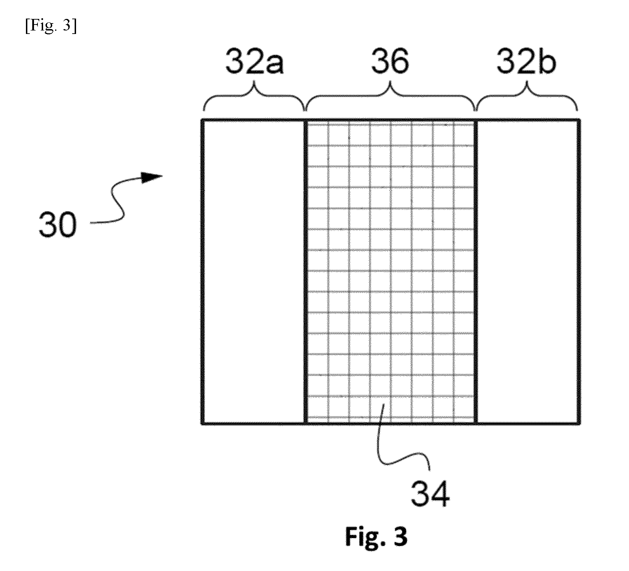

Les figures 2 et 3 illustrent un deuxième mode de mise en œuvre dans lequel l'éclairage du code 12 n'est plus de type bright field comme décrit précédemment mais de type dark field.

Selon ce deuxième mode de mise en œuvre, la source lumineuse 30 est toujours alignée avec l'axe optique A du système d'imagerie optique 21, au moment de la lecture. En particulier, la source lumineuse 30 est ici alignée avec le code 12 dans une direction orthogonale aux faces principales 10a, 10b de l'article, et le dispositif portatif 20 est orienté par l'opérateur de sorte que le capteur optique 22 se trouve en regard du code 12 dans une direction de lecture correspondant à l'axe optique A du système d'imagerie 21.

Pour obtenir l'éclairage de type dark field, un masque 34 (voir figures 2 et 3) est disposé de façon à masquer une partie de la source lumineuse 30 et former une zone sombre 36 entourée de deux zones d'éclairement 32a, 32b. C'est vers cette zone sombre 36 que le champ d'observation C du capteur optique 22 est orienté. Comme illustré sur la figure 3, aucune zone d'éclairement 32a, 32b ne croise alors le champ d'observation C du capteur optique 22. Avec ces dispositions, le code peut avantageusement apparaître lumineux sur un fond complètement noir, et ainsi permettre un meilleur contraste. De préférence, l'axe optique A du dispositif d'imagerie 21 est centré sur le milieu de la zone sombre 36.

D'une manière générale, le masque 34 est de tout type adapté pour produire au moins une zone sombre 36 et au moins une zone d'éclairement à partir d'une seule zone d'éclairement initiale. Par exemple, le masque 34 peut avoir une forme de bande parallèle aux deux zones d'éclairement 32a, 32b, qui forment elles-mêmes deux bandes d'éclairement. Plus particulièrement, le masque 34 peut aussi avoir la forme d'un disque au centre d'une zone d'éclairement en forme d'anneau.

La zone sombre 36 est de préférence plus large que le champ d'observation C du capteur optique 22, de façon à ce que les bords de l'image capturée par le capteur 22 soient bien en zone sombre.

Par ailleurs, avantageusement, la distance D2 entre la source lumineuse 30 et la deuxième face principale 10b de la feuille de verre 10, mesurée orthogonalement aux faces principales de l'article, est comprise entre 1 et 5 cm.

A noter que sur la figure 2 le code 12 est marqué sur la première face principale 10a de la feuille de verre 10, mais qu'en variante il pourrait être marqué sur la deuxième face 10b ou dans l'épaisseur de la feuille 10.

A noter par ailleurs que dans le cas d'un éclairage de type dark field tel que décrit en lien avec le deuxième ou le troisième mode de réalisation, la source lumineuse 30 présente une luminance moyenne sur sa zone d'éclairement comprise entre 630 et 140000 cd/m², de préférence comprise entre 25000 et 140000 cd/m².

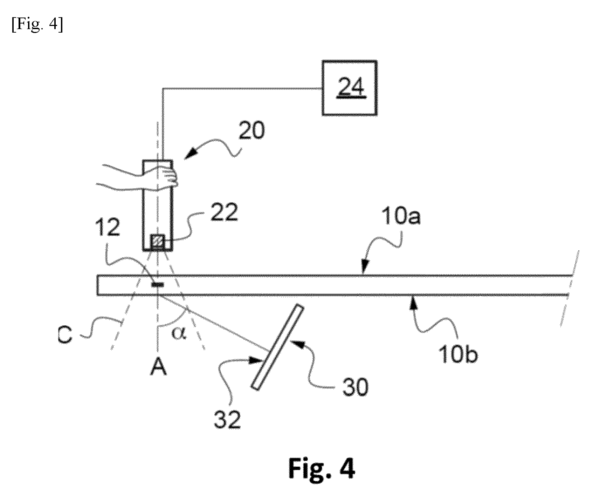

La figure 4 illustre un troisième mode de mise en œuvre dans lequel l'éclairage est de type dark field. Dans ce mode, cependant, la source lumineuse 30 est décalée par rapport à l'axe optique A du système d'imagerie, de sorte qu'elle se trouve hors du champ d'observation C du capteur 22.

Dans l'exemple, plus particulièrement, la source 30 s'étend et éclaire dans une direction formant un angle α avec un axe coupant le code 12 et orthogonal aux faces principales 10a, 10b de la feuille de verre 10. L'angle α est typiquement compris entre 5 et 80°.

A noter que, sur la figure 3, le code 12 est marqué cette fois dans l'épaisseur de la feuille de verre 10. Comme variante, il pourrait toutefois être marqué sur la première 10a ou la deuxième face principale 10b.

L'invention prévoit, comme variante avantageuse, que le dispositif portatif intègre le système d'imagerie optique 21 et la source lumineuse 30.

Dans ce cas, le système portatif est configuré de sorte que la source lumineuse qu'il intègre puisse être positionnée du deuxième côté de l'article, de façon à agir de la même façon que décrit en lien avec les modes de réalisation précédents, notamment en facilitant la relecture d'un code de qualité dégradée en faisant ressortir les symboles par rapport aux défauts ou en permettant l'imagerie d'un code situé sur la deuxième face ou dans le volume de l'article lorsque cet article a une transmission lumineuse basse.

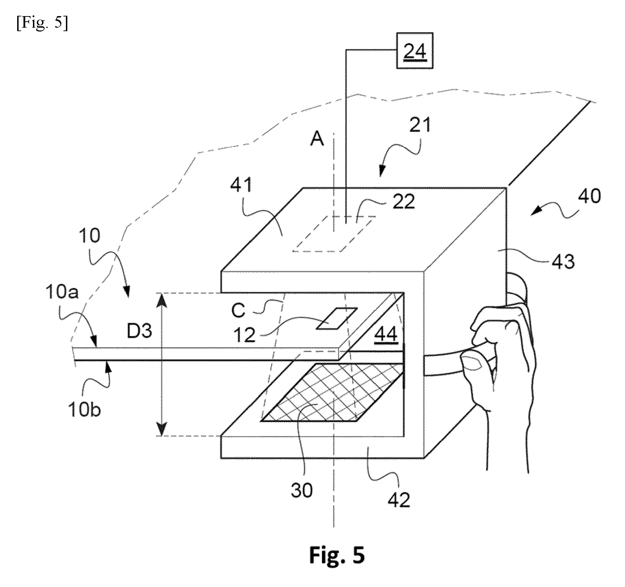

La figure 5 illustre un tel dispositif portatif 40, comprenant :
- une première branche 41 portant le système d'imagerie optique 21
- une deuxième branche 42 portant la source lumineuse 30, et
- une branche intermédiaire 43 reliant entre elles les première et deuxième branches 41, 42.

Le dispositif portatif 40 présente ainsi une forme globale de U, la branche intermédiaire 43 formant la base du U et les première et deuxième branches étant espacées l'une de l'autre de sorte à définir entre elles un espace de réception 44.

Avantageusement, au moins l'une des branches, notamment la branche intermédiaire 43 comme dans l'exemple illustré, comprend en outre des moyens de préhension 45, par exemple sous forme de poignée, permettant la prise en main du dispositif 40 par l'opérateur.

Dans l'exemple, la source lumineuse 30 comprend une zone unique d'éclairement 32 formée par exemple par un dispositif à diodes électroluminescentes organiques OLED, ou au moins un dispositif LED associé à un diffuseur.

La source lumineuse 30 est alignée avec l'axe optique du système d'imagerie optique 21 et le capteur optique 22 observe directement la zone d'éclairement 32, dont la surface est de préférence comprise entre 5 et 40 cm².

Avantageusement, la source lumineuse 30 présente une luminance moyenne sur sa zone d'éclairement comprise entre 630 et 140000 cd/m², de préférence comprise entre 2800 et 6000 cd/m².

Par ailleurs, la distance D3 mesurée entre la source lumineuse et le capteur optique est de préférence comprise entre 10 et 25 cm.

L'éclairage est donc similaire à celui du premier mode de mise en œuvre décrit précédemment en lien avec la figure 1. Comme variante, il pourrait aussi être de type dark field et agencé comme décrit dans les deuxième et troisième modes de mise en œuvre décrits précédemment. Dans ce cas, avantageusement, la source lumineuse 30 présente une luminance moyenne sur sa zone d'éclairement comprise entre 630 et 140000 cd/m², de préférence comprise entre 25000 et 140000 cd/m².
Pour la lecture du code 12, le dispositif portatif 40 est pris en main par l'opérateur et engagé autour d'un bord de l'article 10 dans une position - illustrée sur la figure 5 - dans laquelle le capteur optique 22 est situé du premier côté de l'article, en regard du code 12 dans une direction de lecture correspondant à la direction d'observation (ici l'axe optique A) du système d'imagerie, et la source lumineuse 30 est disposée du deuxième côté de l'article 10.

La demanderesse a réalisé différents essais comparatifs de lecture de code, avec plusieurs types de verre et différentes conditions de lecture. Dans l'ensemble des essais réalisés, le code était marqué sur la deuxième face principale de l'article (autrement dit celle opposée à l'opérateur).

Les résultats sont les suivants :
L'essai comparatif N°1 concerne la lecture d'un code sur un article verrier de 4.85 mm d'épaisseur, commercialisé par la demanderesse sous le nom VG10 Comfortsky (sa transmission est de 10%).

Sans source lumineuse du deuxième côté de l'article, pour deux positions différentes du dispositif de lecture, il a été constaté que le code n'est pas visible.

Lorsque le code est éclairé par une source lumineuse du deuxième côté de l'article, en éclairage de type bright field (la source lumineuse est alignée avec l'axe optique du système d'imagerie optique et le capteur optique observe une zone d'éclairement de la source lumineuse), le code est bien visible et relu instantanément.

L'essai comparatif N°2 concerne la lecture d'un code sur un article verrier de 2.1 mm d'épaisseur commercialisé par la demanderesse sous le nom VG10 Comfortsky. Dans cet essai, la zone de l'article portant le code est souillée par une trace de doigt, à la surface du verre.

Lorsque le code est éclairé par une source lumineuse placée du deuxième côté de l'article, en éclairage de type bright field, le code est visible, la trace de doigt n'est pas visualisée et le code est relu instantanément.

En l'absence de source lumineuse, le code est masqué par la trace de doigt, et le code, difficilement lisible.

L'essai comparatif N°3 concerne la lecture d'un code sur un article verrier de 1,8mm d'épaisseur commercialisé par la demanderesse sous le nom TSA 1.8 (de transmission lumineuse égale à 70%).

Lorsque le code est éclairé par une source lumineuse placée du deuxième côté de l'article, en éclairage de type bright field, le contraste est bon : le code est visualisé en noir (il fait de l'ombre) sur un fond qui apparaît clair et ainsi relu instantanément. Lorsque la source est éteinte, que le code soit visualisé sur fond blanc ou sur fond noir, le code est visualisé en blanc (il diffuse) et n'est pas visible car le contraste n'est pas suffisant.

L'essai comparatif N°4 concerne la lecture d'un code sur un article verrier commercialisé par la demanderesse sous le nom XN (de transmission lumineuse égale à 80%). Ici, la face est poussiéreuse et le code de mauvaise qualité. En l'absence de source lumineuse du deuxième côté de l'article, le code n'est pas lisible car présentant une qualité médiocre (que le code soit observé sur fond blanc ou sur fond noir).

Lorsque le code est éclairé par une source lumineuse du deuxième côté de l'article, conformément à l'invention, le code devient noir et est relu instantanément.

## Revendications

1. Procédé de lecture manuelle d'un code (12) marqué sur une feuille de verre (10), ladite feuille de verre (10) présentant une première face principale (10a) sur un premier côté et une deuxième face principale (10b) opposée à la première face principale (10a) sur un deuxième côté, dans lequel, ladite feuille de verre (10) étant fixe, un dispositif portatif (20, 40) muni d'un système d'imagerie optique (21) comprenant au moins un capteur optique (22) et une source lumineuse (30) est configuré pour pouvoir être engagé autour d'un bord de ladite feuille de verre (10) dans une position dans laquelle le capteur optique (22) est situé du premier côté de ladite feuille de verre en regard du code dans une direction de lecture correspondant à la direction d'observation (A) du système d'imagerie optique (21), et la source lumineuse (30) est disposée du deuxième côté de ladite feuille de verre (10), ledit code (12) étant éclairé par ladite source lumineuse (30) située du deuxième côté de ladite feuille de verre (10), au moins une image du code (12) est acquise par le système d'imagerie optique.

2. Procédé selon la revendication précédente, dans lequel, lors de la lecture, la source lumineuse (30) est alignée avec la direction d'observation (A) du système d'imagerie optique (21).

3. Procédé selon la revendication précédente, dans lequel, lors de la lecture, le capteur optique (22) observe une zone d'éclairement (32, 32a, 32b) de la source lumineuse (30).

4. Procédé selon l'une quelconque des revendications 1 à 3, dans lequel la distance (D1) entre la source lumineuse et le code est comprise entre 6 et 16 cm, de préférence entre 10 et 14 cm.

5. Procédé selon la revendication 2, dans lequel la source lumineuse (30) comprend au moins une zone sombre (36) entourée d'une ou plusieurs zones d'éclairement (32a, 32b), et, lors de la lecture, le capteur optique (22) observe une zone sombre (36) de la source lumineuse (30).

6. Procédé selon la revendication 1, dans lequel, lors de la lecture, la source lumineuse (30) est décalée par rapport à l'axe optique (A) du système d'imagerie (21).

7. Procédé selon l'une quelconque des revendications 1 à 6, dans lequel l'article (10) a une transmission lumineuse comprise entre 1 et 70%.

8. Procédé selon l'une quelconque des revendications 1 à 7, dans lequel la source lumineuse (30) présente au moins une zone d'éclairement et la luminance de la source lumineuse sur ladite zone d'éclairement est telle que son homogénéité calculée comme étant 1- E/Lmoy est supérieure à 0.5, avec E l'écart-type de la luminance sur sa au moins une zone d'éclairement et Lmoy la luminance moyenne sur ladite zone d'éclairement.

9. Procédé selon l'une quelconque des revendications 1 à 8, dans lequel la source lumineuse (30) présente au moins une zone d'éclairement et sa luminance moyenne sur sa au moins une zone d'éclairement (32, 32a, 32b)) est comprise entre 630 et 140000 cd/m², de préférence comprise entre 2800 et 6000 cd/m² ou entre 25000 et 140000 cd/m².

10. Procédé selon l'une quelconque des revendications 1 à 9, dans lequel le code (12) est marqué sur la deuxième face (10b) de l'article (10) ou dans l'épaisseur de l'article (10).

11. Procédé selon l'une quelconque des revendications 1 à 10, comprenant une étape préliminaire de positionnement de l'article (10) devant la source lumineuse (30), ladite source lumineuse (30) étant fixe.

12. Procédé selon l'une quelconque des revendications 1 à 10, dans lequel le dispositif portatif (40) intègre le système d'imagerie optique (21) et la source lumineuse (30), et ledit dispositif (40) est engagé autour d'un bord de l'article (10) dans une position dans laquelle le capteur optique (22) est situé du premier côté de l'article en regard du code (12) dans une direction de lecture correspondant à la direction d'observation (A) du système d'imagerie optique (21), et la source lumineuse (30) est disposée du deuxième côté de l'article (10).

13. Dispositif portatif (40) pour la mise en œuvre du procédé selon l'une quelconque des revendications 1 à 12, intégrant un système d'imagerie optique (21) comprenant au moins un capteur optique (22), et une source lumineuse (30), le dispositif portatif (40) étant configuré pour pouvoir être engagé autour d'un bord de la feuille de verre (10) dans une position dans laquelle le capteur optique (22) est situé du premier côté de l'article en regard du code dans une direction de lecture correspondant à la direction d'observation (A) du système d'imagerie optique (21), et la source lumineuse (30) est disposée du deuxième côté de la feuille de verre (10).

14. Dispositif portatif (40) selon la revendication 13, comprenant une première branche (41) portant le système d'imagerie optique (21) et une deuxième branche (42) portant la source lumineuse (30), la première et la deuxième branches (41, 42) étant espacées l'une de l'autre de sorte à définir entre elles un espace de réception (44).

15. Dispositif portatif (40) selon la revendication 13 ou 14, comprenant en outre des moyens de préhension (45), notamment une poignée.

16. Dispositif portatif (40) selon l'une quelconque des revendications 13 à 15, dans lequel la source lumineuse (30) comprend au moins un dispositif à diodes électroluminescentes organiques OLED, ou au moins un dispositif LED, associé à un diffuseur.

17. Dispositif portatif (40) selon l'une quelconque des revendications 13 à 16, dans lequel la source lumineuse (30) a une luminance moyenne sur sa au moins une zone d'éclairement (32, 32a, 32b) comprise entre 630 et 140000 cd/m², de préférence comprise entre 2800 et 6000 cd/m² ou 25000 et 140000 cd/m².

18. Dispositif portatif (40) selon l'une quelconque des revendications 13 à 17, dans lequel la distance (D3) entre la source lumineuse (30) et le capteur optique (22) est comprise entre 10 et 25 cm.

19. Dispositif portatif (40) selon l'une quelconque des revendications 13 à 18, dans lequel la source lumineuse (30) est alignée avec l'axe optique (A) du système d'imagerie optique (21).

20. Dispositif portatif (40) selon la revendication 19, dans lequel le capteur optique (22) observe une zone d'éclairement (32) de la source lumineuse (30).

21. Dispositif portatif (40) selon la revendication 19, dans lequel la source lumineuse comprend une zone sombre (36) entourée d'une ou plusieurs zones d'éclairement (32, 32a, 32b), le capteur optique observant la zone sombre (36).

22. Dispositif portatif (40) selon l'une quelconque des revendications 13 à 18, dans lequel la source lumineuse (30) est décalée par rapport à l'axe optique (A) du système d'imagerie (21).

23. Dispositif portatif selon l'une quelconque des revendications 13 à 22, dans lequel le capteur optique comprend un capteur matriciel.

## Patentansprüche

1. Verfahren zum manuellen Lesen eines Codes (12), der auf einer Glasscheibe (10) markiert ist, wobei die Glasscheibe (10) auf einer ersten Seite eine erste Hauptfläche (10a) und auf einer zweiten Seite eine zweite Hauptfläche (10b) aufweist, die der ersten Hauptfläche (10a) gegenüberliegt, bei dem, mit der Glasscheibe (10) fixiert, eine tragbare Vorrichtung (20, 40), die mit einem optischen Abbildungssystem (21) versehen ist, umfassend mindestens einen optischen Sensor (22) und eine Lichtquelle (30), konfiguriert ist, um um eine Kante der Glasscheibe (10) herum in einer Position in Eingriff gebracht werden zu können, in der sich der optische Sensor (22) auf der ersten Seite der Glasscheibe gegenüber des Codes in einer Leserichtung befindet, die der Beobachtungsrichtung (A) des optischen Abbildungssystem (21) entspricht, und die Lichtquelle (30) auf der zweiten Seite der Glasscheibe (10) angeordnet ist, wobei der Code (12) durch die Lichtquelle (30) beleuchtet wird, die sich auf der zweiten Seite der Glasscheibe (10) befindet, wobei mindestens ein Bild des Codes (12) durch das optische Abbildungssystem erfasst wird.

2. Verfahren nach dem vorstehenden Anspruch, wobei die Lichtquelle (30) während des Lesens an der Beobachtungsrichtung (A) des optischen Abbildungssystems (21) ausgerichtet ist.

3. Verfahren nach dem vorstehenden Anspruch, wobei der optische Sensor (22) während des Lesens einen Beleuchtungsbereich (32, 32a, 32b) der Lichtquelle (30) beobachtet.

4. Verfahren nach einem der Ansprüche 1 bis 3, wobei der Abstand (D1) zwischen der Lichtquelle und dem Code zwischen 6 und 16 cm, vorzugsweise zwischen 10 und 14 cm liegt.

5. Verfahren nach Anspruch 2, wobei die Lichtquelle (30) mindestens einen dunklen Bereich (36) umfasst, der von einem oder mehreren Beleuchtungsbereichen (32a, 32b) umgeben ist, und wobei der optische Sensor (22) während des Lesens einen dunklen Bereich (36) der Lichtquelle (30) beobachtet.

6. Verfahren nach Anspruch 1, wobei die Lichtquelle (30) während des Lesens relativ zu der optischen Achse (A) des Abbildungssystems (21) versetzt ist.

7. Verfahren nach einem der Ansprüche 1 bis 6, wobei der Gegenstand (10) eine Lichtdurchlässigkeit zwischen 1 und 70 % besitzt.

8. Verfahren nach einem der Ansprüche 1 bis 7, wobei die Lichtquelle (30) mindestens einen Beleuchtungsbereich aufweist und die Leuchtdichte der Lichtquelle in dem Beleuchtungsbereich derart ist, dass ihre Homogenität, berechnet als 1 - E/Lmoy, größer als 0,5 ist, wobei E die Standardabweichung der Leuchtdichte in ihrem mindestens einen Beleuchtungsbereich und Lmoy die durchschnittliche Leuchtdichte in dem Beleuchtungsbereich ist.

9. Verfahren nach einem der Ansprüche 1 bis 8, wobei die Lichtquelle (30) mindestens einen Beleuchtungsbereich aufweist und ihre durchschnittliche Leuchtdichte in ihrem mindestens einen Beleuchtungsbereich (32, 32a, 32b) zwischen 630 und 140000 cd/m², vorzugsweise zwischen 2800 und 6000 cd/m² oder zwischen 25000 und 140000 cd/m² liegt.

10. Verfahren nach einem der Ansprüche 1 bis 9, wobei der Code (12) auf der zweiten Fläche (10b) des Gegenstands (10) oder in der Dicke des Gegenstands (10) markiert ist.

11. Verfahren nach einem der Ansprüche 1 bis 10, umfassend einen vorbereitenden Schritt zum Positionieren des Gegenstands (10) vor der Lichtquelle (30), wobei die Lichtquelle (30) fixiert ist.

12. Verfahren nach einem der Ansprüche 1 bis 10, wobei die tragbare Vorrichtung (40) das optische Abbildungssystem (21) und die Lichtquelle (30) integriert, und die Vorrichtung (40) um eine Kante des Gegenstands (10) herum in einer Position in Eingriff steht, in der sich der optische Sensor (22) auf der ersten Seite des Gegenstands gegenüber dem Code (12) in einer Leserichtung befindet, die der Beobachtungsrichtung (A) des optischen Abbildungssystems (21) entspricht, und die Lichtquelle (30) auf der zweiten Seite des Gegenstands (10) angeordnet ist.

13. Tragbare Vorrichtung (40) zum Implementieren des Verfahrens nach einem der Ansprüche 1 bis 12, das ein optisches Abbildungssystem (21), umfassend mindestens einen optischen Sensor (22), und eine Lichtquelle (30) integriert, wobei die tragbare Vorrichtung (40) konfiguriert ist, um um eine Kante der Glasscheibe (10) herum in einer Position in Eingriff gebracht werden zu können, in der sich der optische Sensor (22) auf der ersten Seite des Gegenstands gegenüber dem Code in einer Leserichtung befindet, die der Beobachtungsrichtung (A) des optischen Abbildungssystems (21) entspricht, und die Lichtquelle (30) auf der zweiten Seite der Glasscheibe (10) angeordnet ist.

14. Tragbare Vorrichtung (40) nach Anspruch 13, umfassend einen ersten Zweig (41), der das optische Abbildungssystem (21) trägt, und einen zweiten Zweig (42), der die Lichtquelle (30) trägt, wobei der erste und der zweite Zweig (41, 42) so voneinander beabstandet sind, dass zwischen ihnen ein Aufnahmeraum (44) definiert ist.

15. Tragbare Vorrichtung (40) nach Anspruch 13 oder 14, ferner umfassend Greifmittel (45), insbesondere einen Griff.

16. Tragbare Vorrichtung (40) nach einem der Ansprüche 13 bis 15, wobei die Lichtquelle (30) mindestens eine Vorrichtung mit organischen Leuchtdioden **OLED** oder mindestens eine LED-Vorrichtung umfasst, die mit einem Diffusor verbunden ist.

17. Tragbare Vorrichtung (40) nach einem der Ansprüche 13 bis 16, wobei die Lichtquelle (30) eine durchschnittliche Leuchtdichte in ihrem mindestens einen Beleuchtungsbereich (32, 32a, 32b) zwischen 630 und 140000 cd/m², vorzugsweise zwischen 2800 und 6000 cd/m² oder 25000 und 140000 cd/m² aufweist.

18. Tragbare Vorrichtung (40) nach einem der Ansprüche 13 bis 17, wobei der Abstand (D3) zwischen der Lichtquelle (30) und dem optischen Sensor (22) zwischen 10 und 25 cm liegt.

19. Tragbare Vorrichtung (40) nach einem der Ansprüche 13 bis 18, wobei die Lichtquelle (30) an der optischen Achse (A) des optischen Abbildungssystems (21) ausgerichtet ist.

20. Tragbare Vorrichtung (40) nach Anspruch 19, wobei der optische Sensor (22) einen Beleuchtungsbereich (32) der Lichtquelle (30) beobachtet.

21. Tragbare Vorrichtung (40) nach Anspruch 19, wobei die Lichtquelle einen dunklen Bereich (36) umfasst, der von einem oder mehreren Beleuchtungsbereichen (32, 32a, 32b) umgeben ist, wobei der optische Sensor den dunklen Bereich (36) beobachtet.

22. Tragbare Vorrichtung (40) nach einem der Ansprüche 13 bis 18, wobei die Lichtquelle (30) von der optischen Achse (A) des Abbildungssystems (21) versetzt ist.

23. Tragbare Vorrichtung nach einem der Ansprüche 13 bis 22, wobei der optische Sensor einen Matrixsensor umfasst.

## Claims

1. A method for manually reading a code (12) marked on a glass sheet (10), said glass sheet (10) having a first main face (10a) on a first side and a second main face (10b), opposite the first main face (10a), on a second side, wherein, said glass sheet (10) being fixed, a portable device (20, 40) equipped with an optical imaging system (21) comprising at least one optical sensor (22) and a light source (30) is configured to be able to be engaged around an edge of said glass sheet (10) in a position in which the optical sensor (22) is located on the first side of said glass sheet facing the code in a reading direction corresponding to the observation direction (A) of the optical imaging system (21), and the light source (30) is arranged on the second side of said glass sheet (10), said code (12) being illuminated by said light source (30) located on the second side of said glass sheet (10), at least one image of the code (12) is acquired by the optical imaging system.

2. The method according to the preceding claim, wherein, during the reading, the light source (30) is aligned with the observation direction (A) of the optical imaging system (21).

3. The method according to the preceding claim, wherein, during the reading, the optical sensor (22) observes an illuminating zone (32, 32a, 32b) of the light source (30).

4. The method according to any one of claims 1 to 3, wherein the distance (D1) between the light source and the code is between 6 and 16 cm, preferably between 10 and 14 cm.

5. The method according to claim 2, wherein the light source (30) comprises at least one dark zone (36) surrounded by one or more illuminating zones (32a, 32b) and, during the reading, the optical sensor (22) observes a dark zone (36) of the light source (30).

6. The method according to claim 1, wherein, during the reading, the light source (30) is offset relative to the optical axis (A) of the imaging system (21).

7. The method according to any one of claims 1 to 6, wherein the article (10) has a light transmission of between 1 and 70%.

8. The method according to any one of claims 1 to 7, wherein the light source (30) has at least one illuminating zone and the luminance of the light source over said illuminating zone is such that the homogeneity thereof, calculated as being 1- E/Lmean, is greater than 0.5, where E is the standard deviation of the luminance over its at least one illuminating zone and Lmean is the mean luminance over said illuminating zone.

9. The method according to any one of claims 1 to 8, wherein the light source (30) has at least one illuminating zone and the mean luminance thereof over its at least one illuminating zone (32, 32a, 32b)) is between 630 and 140000 cd/m², preferably between 2800 and 6000 cd/m² or between 25000 and 140000 cd/m².

10. The method according to any one of claims 1 to 9, wherein the code (12) is marked on the second face (10b) of the article (10) or in the thickness of the article (10).

11. The method according to any one of claims 1 to 10, comprising a preliminary step of positioning the article (10) in front of the light source (30), said light source (30) being fixed.

12. The method according to any one of claims 1 to 10, wherein the portable device (40) integrates the optical imaging system (21) and the light source (30), and said device (40) is deployed around an edge of the article (10) in a position in which the optical sensor (22) is located on the first side of the article facing the code (12) in a reading direction corresponding to the observation direction (A) of the optical imaging system (21), and the light source (30) is arranged on the second side of the article (10).

13. A portable device (40) for implementing the method according to any one of claims 1 to 12, integrating an optical imaging system (21) comprising at least one optical sensor (22), and a light source (30), the portable device (40) being configured to be deployed around an edge of the glass sheet (10) in a position in which the optical sensor (22) is located on the first side of the article facing the code in a reading direction corresponding to the observation direction (A) of the optical imaging system (21), and the light source (30) is arranged on the second side of the glass sheet (10).

14. The portable device (40) according to claim 13, comprising a first branch (41) carrying the optical imaging system (21) and a second branch (42) carrying the light source (30), the first and the second branches (41, 42) being spaced apart from one another so as to define a receiving space (44) between them.

15. The portable device (40) according to claim 13 or 14, further comprising gripping means (45), particularly a handle.

16. The portable device (40) according to any one of claims 13 to 15, wherein the light source (30) comprises at least one organic light-emitting diode OLED device, or at least one LED device, associated with a diffuser.

17. The portable device (40) according to any one of claims 13 to 16, wherein the light source (30) has a mean luminance over its at least one illuminating zone (32, 32a, 32b) of between 630 and 140000 cd/m², preferably between 2800 and 6000 cd/m² or 25000 and 140000 cd/m².

18. The portable device (40) according to any one of claims 13 to 17, wherein the distance (D3) between the light source (30) and the optical sensor (22) is between 10 and 25 cm.

19. The portable device (40) according to any one of claims 13 to 18, wherein the light source (30) is aligned with the optical axis (A) of the optical imaging system (21).

20. The portable device (40) according to claim 19, wherein the optical sensor (22) observes an illuminating zone (32) of the light source (30).

21. The portable device (40) according to claim 19, wherein the light source comprises a dark zone (36) surrounded by one or more illuminating zones (32, 32a, 32b), the optical sensor observing the dark zone (36).

22. The portable device (40) according to any one of claims 13 to 18, wherein the light source (30) is offset relative to the optical axis (A) of the imaging system (21).

23. The portable device according to any one of claims 13 to 22, wherein the optical sensor comprises a matrix sensor.
